# EUROPEAN PATENT APPLICATION

(11) **EP 4 800 476 A1**
(43) Date of publication of application: **02.09.2026**
(21) Application number: 25160433.6
(22) Date of filing: 26.02.2025
(51) Int. Cl.: G03B 21/20

(54) **OPTICAL MODULE FOR GENERATING A LIGHT BEAM FOR ENTERTAINMENT APPLICATIONS AND METHOD OF PRODUCING AN OPTICAL MODULE**

(71) Applicant: Laserworld AG, 8574 Lengwil (CH)
(72) Inventor: Dittrich, Helmar, 10247 Berlin (DE); Sollinger, Michael, 10823 Berlin (DE)
(74) Representative: Mzb PartmbB

(57) **Abstract**

The invention relates to an optical module (10) for generating a light beam for entertainment applications. It has at least two light sources (14) configured to generate at least two single light beams (16), wherein the optical module (10) has a trough (12) being open to a top side, wherein the light sources (14) are arranged in a bottom part of the trough (12), wherein the single light beams (16) are combined in a combiner (20) to form a combined light beam (22), wherein the single light beams (16) and / or the combined light beam (22) are redirected by mirrors (18), for example from a vertical direction (v) into a horizontal direction (h). At least one mirror (18) is fixed directly to the trough (12). The invention also provides a method (1000) for producing the optical module. The invention provides cost-efficient solutions for high-power and high-precision lighting applications.

## Description

### Technical Field

The invention relates to an optical module for generating a light beam. Such optical modules are employed, for example, in lighting applications for entertainment.

### Background Art

WO2023232224 A1 describes an optoelectronic module and a process for the manufacture thereof.

### Summary of Invention

The invention is set out in the appended set of claims.

### Technical Problem

Entertainment applications, for example long range laser shows, often require high-power laser beams, for example, having an optical power of at least 20 W.

Such high-power applications often set specific requirements on shape, light distribution, divergence, or other properties of the generated light beams. These specific requirements should be met with low tolerance.

Depending on the technology used for generating the light beam, losses of up to 96 % of the input power in the form of heat are inevitable. Even modern diode-based light sources may have significant losses, which may, depending on wavelength or, respectively colour, reach 80 % or more. The heat may lead to additional changes in colour and / or shape of the light beam. It may reduce a total lifetime of the optical module and, in particular, of its light sources. Furthermore, for proper functioning, semiconductor-based light sources like laser diodes require certain, allowable temperatures.

In order to meet the requirements within the allowable tolerances, optical components of the optical module are often to be re-adjusted, resulting in high servicing costs.

In contrast to other laser applications in the visible spectral range, for example in contrast to injecting laser light into glass fibres, entertainment applications, in particular for long range applications, often require a very low divergence.

Therefore, there is an ongoing need for cost-efficient solutions that enable high-power applications of optical modules for generating high-quality light beams and it is an object of this invention to provide such solutions. Preferably, the solution should be highly shock-resistant to enable the use of the optical module in harsh environments or applications and to minimize servicing costs. The design should be compact to facilitate transportation to and from events. The generated light beams should have high intensities, low divergences, at least substantially uniform or adjustable intensity distributions, and / or predefined shapes or diameters. The solution should be flexible and enable to design the generated light beams in regard to various target parameters like shape, size, divergence, or intensity.

Furthermore, there is a need for a cost-efficient method for producing such optical modules.

### Solution to the Problem

As shall be further elucidated in the following description, this problem is solved by an optical module for generating a light beam for entertainment applications, having at least two light sources configured to generate at least two single light beams, wherein the optical module has a trough, wherein the light sources are arranged in the trough, wherein the single light beams are combined in a combiner to form a combined light beam, wherein the single light beams and / or the combined light beam are redirected, for example from a vertical direction into a horizontal direction, by mirrors, and wherein the mirrors are fixed directly to the trough.

A further solution is a method of producing such an optical module, wherein at least one of the mirrors of the optical module is fixed directly to the trough.

### Advantageous Effects of Invention

The light sources produce a plurality of single light beams which then can be combined in the combiner. The combined light beam may reach a high output power, for example, at least 20 W or at least 100 W or more, even with low-cost light sources. The output power may be adapted by choosing the appropriate total number of light sources.

The combiner may combine the single light beams into the combined light beam. In particular, the combiner may be configured to combine single light beams of different polarizations and from different directions into one light beam. Single light beams may be unified, for example in case of different wavelengths.

A compact design is possible as the light sources are arranged in the trough and the mirrors are fixed to the trough. A particular compact design may be achieved if the trough is oriented vertically, so that the light sources may be arranged below the mirrors. Several of such vertically oriented optical modules, for example for producing different wavelengths, may be arranged next to each other, thus forming a compact multi-colour laser apparatus.

As a further advantage, the trough may form a rigid base structure for precisely holding the mirrors and the light sources in correct positions and orientations relative to one another. The required precision of orientation of the mirrors may be, for example, equal or better than an angle of 50 µrad.

Moreover, rigidity is further improved as the mirrors are directly fixed to the trough.

Precise positions and orientations may be kept over a long lifetime. A low divergence of the combined light beam may be achieved even without regular servicing.

Moreover, the solution may be highly shock resistant and may therefore be suitable for entertainment applications even in harsh environments.

The mirrors may be fixed to the trough in a particularly durable and stable, and also very cost-efficient, way by glueing them to the trough with an adhesive.

Furthermore, directly glueing the mirrors to the trough may avoid or reduce the need for a later re-alignment of the mirrors. This can further reduce servicing costs as compared to, e. g., mirrors that are fixed by screws or the like and that therefore may lose their positions and / or orientations by the time without regular realignment. Therefore, this may further contribute to the cost-efficiency of the optical module.

The mirrors may be configured to redirect the single light beams and / or the combined light beam from a vertical direction into a horizontal direction. Thus, the mirrors may be above the light sources. Apart from enabling a compact design as described above, they may be easily accessible from the top side of the optical module, which may facilitate their assembly.

Own studies have shown that the positions and orientations of the mirrors can be kept very precisely and durably, if the mirrors are fixed to the trough at at least two opposing positions. In particular, the mirrors may be glued to the trough at at least two positions. It is conceivable that also other elements of the optical module, for example one or more lenses, are fixed at at least two opposing positions. The opposing positions may refer to positions of a cross-section of the mirrors or elements. Fixing the mirrors at at least two opposing positions may comprise that they are fixed at n, n>1, positions, wherein the positions are within different sectors each having an angle of 360°/n. For example, if each of the mirrors is glued at two positions to the trough, the n=2 positions may be located in two different halves of the cross-section of the mirror.

Fixing, in particular glueing, the mirrors or, generally speaking, the elements, directly to the trough at two or more opposing positions has shown to enable divergences of the combined light beam of 1 mrad or less, as is required for high-power, long-range laser beam applications, for example for laser displays for entertainment applications. A collinearity of the single light beams of better than 100 µrad, for example in the range of 0.01 to 0.1 mrad, can be achieved.

Glueing may enable to preserve such a high degree of collinearity also in the long term.

The combined light beam may be shaped in a defined fashion if the optical module has a beam shaper. The beam shaper may be configured that the single light beams and / or the combined light beam pass through the beam shaper. The beam shaper may comprise anamorphic prisms. For example, the anamorphic prisms may be used to modify the combined light beam's divergence-diameter ratio according to the specific requirements or target parameters.

Hence, the optical module may enable a distinctive beam modelling depending on application-specific requirements, for example by adequately designing and arranging the anamorphic prisms and / or the combiner.

Using anamorphic prisms for the beam shaper may also reduce the total number of parts of the optical module compared to a complex system of different lenses or the like. As the beam shaper may consist of only a few parts that need to be securely and precisely positioned relative to one another, shock resistance of the optical module may be improved further.

Flexibility may be further improved, if the combiner comprises a prism, for example a dovetail prism, for combining the single light beams. In particular the combiner may be a dovetail prism. By adapting the size and / or shape of the prism, the optical module may be easily adapted, even to a large number of light sources.

In the alternative, or additionally, the combiner may comprise a combination of a deflection mirror and a polarization cube or disc to combine the single light beams in a cost-effective way.

The light sources may comprise a laser light source, for example a laser diode. As high-power laser diodes often have highly differing fast axis width and slow axis widths. A fast axis width may typically be approximately 1 µm, whereas a typical slow axis width may be approximately 20 µm, corresponding to a ratio of approximately 1 : 20 (or even more).

To reduce this ratio and to efficiently pre-collimate a single light beam, the laser light source, for example the laser diode, may comprise an integrated fast axis collimator.

For further collimation, each of the light beams may pass at least one separate collimator.

The at least one collimator may comprise a cylindrical lens. In some embodiments, the at least one collimator may comprise a spherical lens, which may substantially facilitate the assembly of the optical module. A spherical lens may have fewer degrees of freedom to be justified during assembly compared to a cylindrical lens. The collimator may comprise an achromatic lens, in particular a spherical achromatic lens.

It is conceivable that, in a first step, the optical module may be configured such that the single light beams are pre-collimated in regard to the fast axes of their laser light source by the fast axis collimators. As a second step, the single light beams may then pass the spherical lenses of the collimators to be collimated in regard to the slow axes of the laser light sources. As a third step, the single light beams may be combined into the combined light beam. The beam shaper, in particular the anamorphic prism, may collimate the combined light beam in order to reach a target divergence. For example, a divergence in regard to the fast axes added during the second step of collimating by the spherical lens, may be corrected.

To facilitate the optimization of the total divergence of the combined light beam, the light sources may be arranged in the trough with the same orientation and / or heading. In particular, their fast axes may be oriented parallel to one another, and their slow axes may be oriented parallel to one another.

In this way, the total number of parts required to reach an excellently low total divergence of the combined light beam may be reduced in contrast to forming each of the single light beams separately in regard to their fast and slow axes and to combine them afterwards.

An optical module configured to implement the third step, in particular an optical module configured to implement the first, second, and third step, may be considered as an invention. This invention can be considered independently or in addition to other features mentioned, like using the trough or fixing elements directly to the trough.

The collimator may be arranged in the trough, in particular at a distance from the corresponding light sources and / or close to the corresponding light source.

The light sources may be arranged in at least two clusters. Each cluster may comprise a set of mirrors and / or prisms for redirecting and / or combining the respective single light beams to provide a pre-combined light beam. All pre-combined light beams may be combined with each other to form the combined light beam. Each cluster may comprise a plurality of light sources, e. g. 4, 5, 7, 10, or more.

To improve heat transfer and, hence, to reduce changes of the optical module's geometry due to thermal linear expansion and the like, the trough may be made of aluminium. Moreover, in general, aluminium is less expensive than other materials with high specific thermal conductivity like, e. g., copper. A metal trough, in particular a trough made from aluminium, may also protect the light sources against damage and, thus, further improve the shock resistance.

The single light beams and / or the combined light beam may be redirected by mirrors.

The assembly is particularly facilitated if the mirrors for redirecting the single light beams and / or the combined light beam are arranged in an upper part of the trough.

The light sources may be arranged in a bottom part of the trough. They may emit their single light beams in the vertical direction. The light sources may be cooled efficiently through an underside of the trough and / or by coolers arranged at the underside of the trough.

Preferably, the adhesive may be configured to be cured by light, in particular ultraviolet light, and / or by microwaves. This may simplify the manufacturing process, as the mirrors may be precisely positioned and then quickly and durably fixed by glueing and curing, in particular within seconds. Particularly advantageously, ultraviolet light can be focused on the adhesive to be cured, so that the adhesive can be cured particularly selectively. Moreover, ultraviolet light and / or microwaves can be timed very precisely. So, the curing process can be started exactly when a mirror has precisely reached its intended position. As a result, the quality of the single light beams and / or the combined light beam may be further improved.

To provide for a high colour stability, coherence and low divergence, at least one of the light sources, preferably all light sources, may comprise a laser light source, for example a laser diode.

In some embodiments, the optical module may comprise one or more active coolers, for example in form of Peltier elements, configured to cool at least one of the light sources and / or the trough. The active coolers may further increase cooling power available to cool the light sources, and, thus, to further enhance their temperature stability, chromatic stability, total lifetime, etc., and the geometrical stability of the optical module as a whole. Additionally, or alternatively, the coolers may comprise a fluid-based cooler, for example a water-based cooler.

A maximum total input power of the optical module may be at least 100 W to facilitate, for example, outdoor applications.

In some, particularly compact, embodiments, the optical module may have a width of the optical module of equal or less than 5 cm and/or may have a length of the optical module which is equal or less than 20 cm. Such a compact design is possible due to the low number of individual parts of the optical module and the arrangement of main parts, like the light sources, the mirrors, the combiner, the beam shaper, etc. in or at the trough, enabling an efficient thermal management and flexible design options.

The invention further relates to a method of producing an optical module of any of the kinds previously described, wherein at least one of the mirrors is fixed directly to the trough. Preferably, it may be glued directly to the trough using an adhesive.

In particular, the adhesive may be cured by ultraviolet light or microwaves.

Other parts, in particular the combiner and / or the beam shaper may also be glued, preferably to the trough. Their adhesives may also be cured by UV light or microwaves. UV light may be selectively applied to the mirrors. UV light and / or microwaves enable a precise timing of the curing process of the adhesive, thus enabling an easy, but nonetheless highly precise orientation of the mirrors relative to the trough.

Hence, the methods enable a cost-efficient manufacture, wherein main parts, in particular the mirrors, the combiner and / or the beam shaper may be placed with high precisions and then fixed to the trough by glueing, thus providing a rigid structure, providing high-quality light beams, and having a long lifetime and requiring only low servicing costs.

Further features and advantages of the invention result from the following detailed brief description of the drawings, the description of embodiments of the invention and the figures in the drawings, which show details of the invention, and from the claims.

The individual features can be realized individually or in combinations in various embodiments of the invention.

### Brief Description of Drawings

- Fig. 1: shows a schematic longitudinal sectional view of an optical module,
- fig. 2: shows a schematic cross-sectional view of the optical module,
- fig. 3: shows a flowchart of a method of producing an optical module, and
- fig. 4: shows a functional diagram of an optical module.

### Description of Embodiments

To facilitate the understanding of the invention, the same reference signs are used for equal or similar parts throughout the following description.

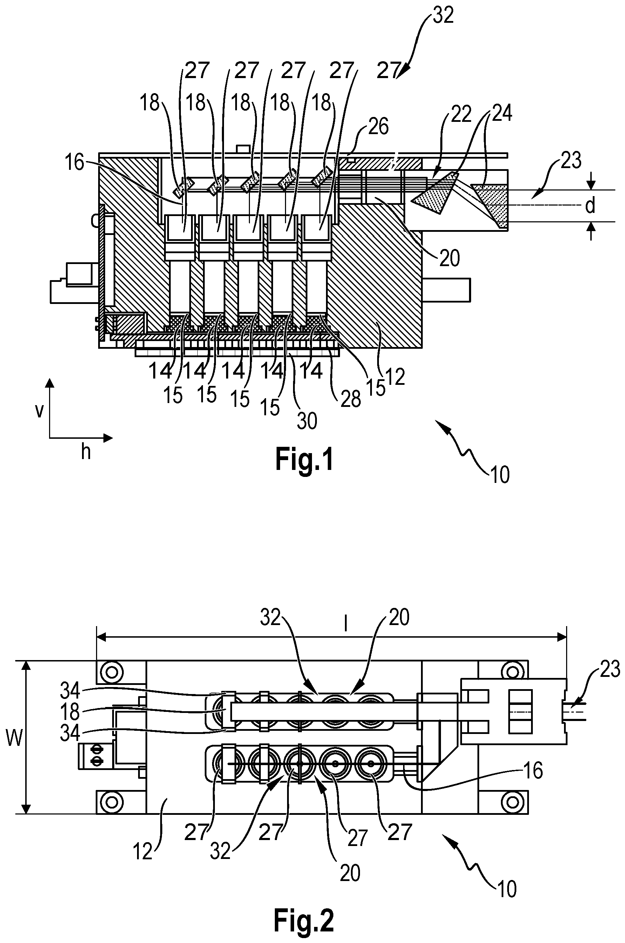

Fig. 1 shows an optical module 10 for generating a light beam. The optical module 10 has a trough 12. The trough 12 is made of aluminium. A plurality of light sources 14 is arranged in a bottom part of the trough 12. The light sources 14 comprise laser diodes, which emit a corresponding plurality of single light beams 16 in form of laser light beams in a vertical direction v. In order to simplify fig. 1, in fig. 1 only one of the single light beams 16 is marked with the reference number 16.

Each of the light sources 14 may comprise a fast axis collimator 15 for pre-collimating the single laser light beams 16.

The single light beams 16 pass collimators 27, which individually collimate the single light beams 16 further.

The single light beams 16 are redirected in a horizontal direction h by several mirrors 18. The mirrors 18 are slightly displaced to one another along the vertical direction v.

The mirrors 18 are glued with adhesives directly to the trough 12 in an upper part of the trough 12, so that their positions and orientations relative to the trough 12 is permanently and rigidly fixed.

The single light beams 16 pass through a combiner 20. As will be described in more detail in relation to fig. 2, the combiner 20 combines the single light beams 16 and other, additional light beams from a separate cluster of light sources 14 in order to form a combined light beam 22. The combiner 20 is configured to combine different light beams from different directions having different polarizations into one beam. The combiner 20 comprises a dovetail prism.

The combined light beam 22 is further shaped by a beam shaper 24. The beam shaper 24 comprises a set of anamorphic prisms. It widens the combined light beam 22 to a diameter d forming a final combined light beam 23. The diameter d may be chosen according to an envisaged application and / or environment.

As a result, the optical module 10 generates the final combined light beam 23.

A top side of the trough 12 is protected against dust, humidity, etc. by a cover 26.

The light sources 14 are in thermal contact to an underside 28 of the trough 12. The underside 28 forms a cooling area for cooling the light sources 14, in particular by thermal conduction. Active coolers 30 are mounted on an outer side of the underside 28. The active coolers 30 comprise thermoelectric elements, e. g. Peltier elements, for actively cooling the underside 28 and, thus, the light sources 14.

As can be seen in fig. 1 and, in particular, in fig. 2, the light sources 14 form clusters 32. In the embodiment as shown in fig. 1 and fig. 2, the optical module 10 comprises two clusters 32 each having five light sources 14. The number of light sources 14 may vary depending on the required total output power of the optical module 10. It is conceivable to have 7, 10 or more light sources 14 in each of the clusters 32. An optical module 10 may also have only one cluster 32 or more than two clusters 32.

In this embodiment, the clusters 32 and its respective light sources 14 are similar to each other in nature and in respect to the vertical orientation of the single light beams 16 at their respective light sources 14. It is conceivable that the light sources 14 comprise laser diodes of different wavelengths, intensity and / or geometry.

In this embodiment, all of the single light beams 16 of each of the clusters 32 share the same polarization, thus enabling the combiner 20 to polarization-combine the single light beams 16 of the two clusters 32 into the combined light beam 22.

The resulting combined light beam 22 may be non-polarized but may maintain other beam specifications of the single light beams 16. The resulting beam specifications of the final combined light beam 23, in particular its diameter d, may, in particular, be adjusted by adequately choosing and placing the beam shaper 24.

The optical module 10 has a length l of less than 0.2m, e. g. 9 cm. Its width w is less than 0.1 m, e. g. 5 cm.

Fig. 2 schematically shows adhesives 34, which have been cured by exposure to ultraviolet light so that they glue the mirrors 18 directly to the trough 12. Due to the cross-sectional view of the optical module 10, only a few of the mirrors 18 and, thus, only a few of the adhesives 34 are visible in fig. 2.

As can be seen, for example in regard to the mirror 18 on the left in the upper row in fig. 2, i. e. the mirror 18 marked with the reference sign 18, each of the mirrors 18 is glued with the adhesives 34 at two opposing positions directly to the trough 12.

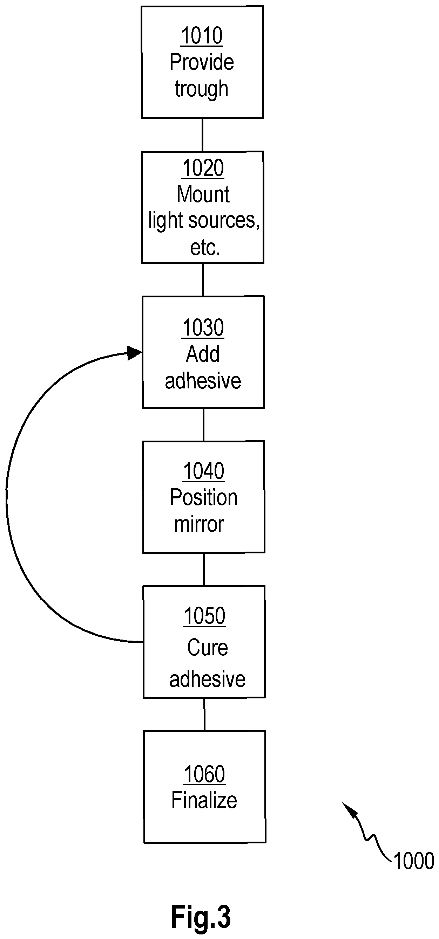

Fig. 3 shows a method 1000 for producing an optical module 10 as previously described.

In a first phase 1010, the trough 12 is provided.

In a subsequent phase 1020 the light sources 14 and the collimators 27 are mounted in the bottom part of the trough 12. Furthermore, other parts, except for the mirrors 18, are mounted into the trough 12, for example the combiner 20, the beam shaper 24, and / or a controller for controlling the light sources 14 and power electronics for driving them, etc. Particularly, the combiner 20 and / or the beam shaper 24 may be glued to the trough 12 with an adhesive, wherein the adhesive may be cured by ultraviolet light.

In subsequent phases, starting with a phase 1030, each of the mirrors 18 is mounted one after the other.

Firstly, in phase 1030 adhesive 34 is applied to side faces of the mirror 18 to be mounted.

Subsequently, in a further phase 1040, the mirror 18 is precisely placed at its intended position and with its intended orientation inside the trough 12.

To secure the position and the orientation, the adhesive 34 on the side faces of the mirror 18 is exposed, at least partially, to ultraviolet light during a phase 1050 until the adhesive 34 is sufficiently cured. It is conceivable that the placement and orientation of the mirrors 18 is monitored by cameras and / or other sensors. For example, parameters like a degree of collinearity or a total beam width of the combined light beam may be measured and the mirror 18 concerned may be rotated and / or moved until an optimum, for example a low degree of collinearity is achieved.

The phases 1030 to 1050 are repeated for each mirror 18 remaining to be mounted into the trough 12, until all of the mirrors 18 are mounted into the trough 12.

In a phase 1060 the assembly of the optical module 12 is finalized. Remaining parts, for example external parts like active coolers, are mounted into or onto the trough 12.

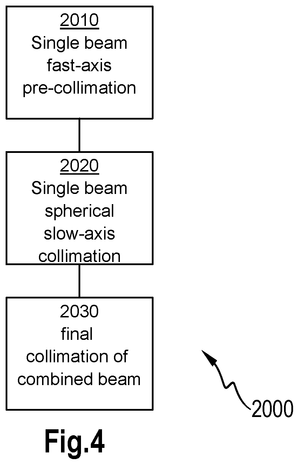

Fig. 4 shows a functional diagram 2000 of a further embodiment of an optical module. This optical module may have one or more of the features of the optical module 10 previously described.

The optical module may be configured to implement a first step 2010, which is pre-collimating each of the single light beams 16 using fast axis collimators, for example the fast axis collimators 15.

The optical module may also be configured to implement a second step 2020, which is collimating each of the single light beams 16, in particular in regard to the slow axes of their corresponding light sources 14, using the spherical lenses of the collimators 27.

The optical module may also be configured to implement a third step 2030, which is combining the single light beams 16 into the combined light beam 22 and finally collimating the combined light beam 22, preferably by passing the combined light beam 22 through the beam shaper 24, particularly, its anamorphic prisms.

### Industrial Applicability

The invention is applicable throughout the entertainment industry. Its benefits further apply over a wide range of other applications that can be broadly classed as "illumination", including machine vision, inspection, entertainment FX, medical uses, etc.

**Reference Signs List**

| **Reference sign** | **Description** |
|---|---|
| 10 | optical module |
| 12 | trough |
| 14 | light source |
| 15 | fast axis collimator |
| 16 | single light beam |
| 18 | mirror |
| 20 | combiner |
| 22 | combined light beam |
| 23 | final combined light beam |
| 24 | beam shaper |
| 26 | cover |
| 27 | collimator |
| 28 | underside |
| 30 | cooler |
| 32 | cluster |
| 34 | adhesive |
| 1000 | method |
| 1010 | phase |
| 1020 | phase |
| 1030 | phase |
| 1040 | phase |
| 1050 | phase |
| 1060 | phase |
| 2000 | functional diagram |
| 2010 | first step |
| 2020 | second step |
| 2030 | third step |
| d | diameter |
| h | horizontal direction |
| l | length |
| v | vertical direction |
| w | width |

## Claims

1. Optical module (10) for generating a light beam for entertainment
applications, having at least two light sources (14) configured to generate at least two single light beams (16),
wherein the optical module (10) has a trough (12),
wherein the light sources (14) are arranged in the trough (12),
wherein the single light beams (16) are combined in a combiner (20) to form a combined light beam (22),
wherein the single light beams (16) and / or the combined light beam (22) are redirected, for example from a vertical direction (v) into a horizontal direction (h), by mirrors (18), and
wherein the mirrors (18) are fixed directly to the trough (12).

2. Optical module according to the previous claim, **characterized in that** the mirrors are fixed to the trough (12) by glueing them with an adhesive (34).

3. Optical module according to any of the previous claims, **characterized in that** the mirrors are fixed, preferably glued, to the through (12) at at least two opposing positions.

4. Optical module according to any of the previous claims, having a beam shaper (24), wherein the beam shaper (24) is configured that the single light beams (16) and / or the combined light beam (22) pass through the beam shaper (24), wherein the beam shaper (24) preferably comprises anamorphic prisms.

5. Optical module according to any of the previous claims, **characterized in that** the combiner (20) comprises a prism, for example a dovetail prism.

6. Optical module according to any of the previous claims, **characterized in that** each of light sources (14) comprises a laser light source with an integrated fast axis collimator (15).

7. Optical module according to any of the previous claims, **characterized in that** each of the single light beams (16) pass at least one separate collimator (27).

8. Optical module according to any of the previous claims, **characterized in that** the at least one collimator (27) comprises a spherical lens.

9. Optical module according to any of the previous claims, **characterized in that** the light sources (14) are arranged in at least two clusters (32).

10. Optical module according to any of the previous claims, **characterized in that** the mirrors (18) for redirecting the single light beams (16) and / or the combined light beam (22) are arranged in an upper part of the trough (12).

11. Optical module according to any of the previous claims, **characterized in that** the light sources (14) are arranged in a bottom part of the trough (12).

12. Optical module according to any of the previous claims, **characterized in that** the adhesive (34) is configured to be cured by light, in particular ultraviolet light, or by microwaves.

13. Optical module according to any of the previous claims, **characterized in that** the optical module (10) has an active cooler (30), for example in form of a Peltier element and / or a water-based cooler, configured to cool at least one of the light sources (14) and / or the trough (12).

14. Optical module according to any of the previous claims, **characterized in that** a width (w) of the optical module (10) is equal or less than 5 cm and/or a length (l) of the optical module is equal or less than 20 cm.

15. Method (1000) of producing an optical module (10) according to any of the previous claims, wherein at least one of the mirrors (18) of the optical module (10) is fixed directly to the trough (12), preferably glued directly to the trough (12) using the adhesive (34).
